# EUROPÄISCHE PATENTANMELDUNG

(11) **EP 4 473 880 A1**
(43) Veröffentlichungstag der Anmeldung: **11.12.2024**
(21) Anmeldenummer: 23178418.2
(22) Anmeldetag: 09.06.2023
(51) Int. Cl.: A47J 43/07

(54) **MESSERVORRICHTUNG MIT MESSERSATZ SOWIE ENTSPRECHENDE KÜCHENMASCHINE MIT MESSERVORRICHTUNG**

(71) Anmelder: Vorwerk & Co. Interholding GmbH, 42270 Wuppertal (DE)
(72) Erfinder: Varnhorst, Mathias, 42349 Wuppertal (DE); Kraus, Roland, 40822 Mettmann (DE)
(74) Vertreter: Bals & Vogel Patentanwälte PartGmbB

(57) **Zusammenfassung**

Die Erfindung betrifft einen Messersatz (40), insbesondere für eine Küchenmaschine (100), der ein eigenständiges Teil einer Messervorrichtung (10) bildet,
wobei der Messersatz (40) durch eine Kupplungseinheit (13) entkoppelbar von einem Messerhalter (20) ausgestaltet ist, und

in einer Betriebsposition (I) der Messerhalter (20) durch eine Antriebskraft (P) von einem Antrieb (102) antreibbar ist und die Antriebskraft (P) durch die Kupplungseinheit (13) auf den Messersatz (40) übertragbar ist, und
wobei in einer Entkopplungsposition (II) die Kupplungseinheit (13) zum mechanischen Entkoppeln des Messersatz (40) vom Messerhalter (20) dient, und
die Kupplungseinheit (13) zumindest zweiteilig ausgestaltet ist, nämlich mit einem Antriebsteil (13.1) am Messerhalter (20) und
einem Gegenantriebsteil (13.2) am Messersatz (40),
wobei der Messersatz (40) eine Drehachse (41) aufweist, an der zumindest eine Messerklinge (44) an einem ersten Ende (41.1) der Drehachse (41) und das Gegenantriebsteil (13.2) am zweiten Ende (41.2) der Drehachse (41) vorgesehen ist. Hierbei ist es erfindungsgemäß vorgesehen, dass am zweiten Ende (41.2) der Drehachse (41) ein freies Endstück (41.3) der Drehachse (41) vorhanden ist, welches zumindest ein, insbesondere elastisches, Dämpferelement (15) aufweist.

Ferner ist die Erfindung auch auf eine Messervorrichtung (10) mit einem erfindungsgemäßen Messersatz (40) und einem Messerhalter (20) sowie auf eine Küchenmaschine (100) mit einer derartigen Messervorrichtung (10) gerichtet.

## Beschreibung

Die vorliegende Erfindung betrifft einen Messersatz gemäß der im Oberbegriff des Anspruchs 1 näher definierten Art. Ferner bezieht sich die Erfindung auf eine Messervorrichtung gemäß dem Oberbegriff von Anspruch 7 sowie auf eine Küchenmaschine nach dem Anspruch 15.

Aus dem Stand der Technik ist es bekannt, dass verschiedene, drehbare Messer bei Küchenmaschinen zum Einsatz kommen. Dabei können diese Messer einerseits von oben in einen Behälter der Küchenmaschinen hineinragen oder andererseits sind sie im Bereich des Bodens vom Behälter angeordnet und ragen dort durch einen Durchbruch im Behälterboden, um unterhalb des Bodens von der Küchenmaschine drehbar angetrieben zu werden. Damit der Behälter mit den Messern abnehmbar zur Küchenmaschine ist, muss eine Kupplung zwischen dem Antrieb in der Küchenmaschine und dem Messer im abnehmbaren Behälter vorgesehen sein.

Nachteilhaft bei den bekannten Lösungen ist es, dass bei derartigen Messern am Behälterboden über die vorhandenen Kupplungen Schwingungen des Motors - wie Unwucht, Statorresonanzen und dergleichen - übertragen werden. Durch die drehfeste Anbindung des Messers an den Behälter werden die Schwingungen nahezu ungedämpft auf diesen übertragen. Die Schwingungs-Weiterleitung in dem Behälter, der in der Regel metallisch ausgestaltet ist, funktioniert leider sehr gut und die gesamte Oberfläche des Behälters kann entsprechenden Luftschall abstrahlen, der teilweise als sehr störend empfunden werden kann.

Außerdem sollte die Kupplung auch eine axiale sowie radiale Führung des Messers übernehmen, um einen dynamisch stabilen Betrieb des Messers - ohne Schleifkontakt zum Behälter - zu ermöglichen.

So ist aus der Druckschrift DE 102 31 995 A1 eine Ausgleichskupplung für einen axialen Versatz bekannt, die jedoch eine Fixierung einer Drehachse des Messers mittels einer Klemmverschraubung ermöglicht. Diese Lösung ist aus technischer Sicht sowie aus wirtschaftlichen Gesichtspunkten für eine Küchenmaschine mit einem abnehmbaren Behälter, an dem das drehbare Messer angeordnet ist, nicht umsetzbar.

Auch ist eine Lösung bekannt, bei der ein Teil der Kupplung, die über eine Verzahnung das Drehmoment vom Antrieb auf das Messer überträgt, mit einer Weichkomponente im Bereich der Verzahnung ausgestaltet ist.

Es ist daher eine Aufgabe der vorliegenden Erfindung, die voranstehend beschriebenen Nachteile zumindest teilweise zu beheben. Insbesondere ist es Aufgabe der vorliegenden Erfindung, einen Messersatz als Teil einer Messervorrichtung sowie eine entsprechende Messervorrichtung und eine Küchenmaschine mit Messervorrichtung bereitzustellen, die einerseits einen dynamisch stabilen Betrieb ermöglichen und andererseits Schwingungen vom Antrieb dämpfen.

Die voranstehende Aufgabe wird gelöst durch einen Messersatz mit den Merkmalen des Anspruchs 1, eine Messervorrichtung mit den Merkmalen des Anspruchs 7 sowie durch eine Küchenmaschine mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Messersatz beschrieben sind, selbstverständlich auch im Zusammenhang mit der erfindungsgemäßen Messervorrichtung sowie mit der erfindungsgemäßen Küchenmaschine, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch einen Messersatz, insbesondere für eine Küchenmaschine, der ein eigenständiges Teil einer Messervorrichtung bildet, wobei der Messersatz durch eine Kupplungseinheit entkoppelbar von einem Messerhalter ausgestaltet ist. In einer Betriebsposition ist der Messerhalter durch eine Antriebskraft von einem Antrieb antreibbar und die Antriebskraft ist durch die Kupplungseinheit auf den Messersatz übertragbar. Die Kupplungseinheit dient zum mechanischen Entkoppeln (und Trennung) des Messersatz vom Messerhalter in eine Entkopplungsposition, wobei die Kupplungseinheit zumindest zweiteilig ausgestaltet ist, nämlich mit einem Antriebsteil am Messerhalter und einem Gegenantriebsteil am Messersatz. Ferner weist der Messersatz eine Drehachse auf, an der zumindest eine Messerklinge an einem ersten Ende der Drehachse und das Gegenantriebsteil am zweiten Ende der Drehachse vorgesehen ist. Hierbei ist es vorgesehen, dass am zweiten Ende der Drehachse ein freies Endstück der Drehachse vorhanden ist, welches zumindest ein Dämpferelement, welches vorzugsweise elastisch ausgestaltet ist, aufweist.

Unter einem "eigenständigen Teil" der Messervorrichtung wird im Sinne der Erfindung verstanden, dass der Messersatz baulich völlig getrennt (durch die Kupplung) vom Rest der Messervorrichtung sowie von einem Behälter der Küchenmaschine ist. So kann der Messersatz als "eigenständiges Teil" auch als einfach auswechselbares Ersatzteil für die Messervorrichtung ausgetauscht werden, falls dieser beispielsweise verschliessen (abgenutzt) sein sollte.

Die im folgenden Text verwendeten (Lage-)Begriffe "oben" und "unten" beziehen sich auf die Einbausituation der Messervorrichtung im Behälter sowie deren Teil, wie diese auch jeweils in den Figuren gezeigt sind.

Die Wirkung und Funktionsweise des Dämpferelements am freien Endstück vom zweiten Ende der Drehachse vom Messersatz wird im Zusammenhang mit der erfindungsgemäßen Messervorrichtung noch näher beschrieben, da die Wirkung denklogisch nur in der Betriebsposition des Messersatz mit dem Messerhalter vorhanden sein kann.

Die Messervorrichtung weist den Messersatz und den entsprechenden Messerhalter (für den Messersatz) sowie die Kupplungseinheit, zur einfachen (mechanischen) Trennung des Messersatz vom Messerhalter von seiner Betriebsposition in seine Entkopplungsposition auf.

Idealerweise erfolgt die Trennung des Messersatz vom Messerhalter durch die Kupplungseinheit durch ein (ausschließliches) einfaches (axiales) Herausziehen oder Herausheben. Somit sind keine weiteren Schritte oder Handlungen zur Trennung des Messersatz vom Messerhalter (von der Betriebsposition in die Entkopplungsposition) notwendig, was eine besonders einfache und schnelle Bedienung bzw. Handhabung ermöglicht. Auch der umgekehrte Schritt, die Verbindung des Messersatz zum Messerhalter ist durch die vorhandene Kupplungseinheit ebenfalls (ausschließlich) durch ein einfaches Hereinführen oder Hereinstecken möglich, um den Messersatz von seiner Entkopplungsposition in seine Betriebsposition zu überführen. Trotz der sehr einfachen Handhabung lässt sich der Messersatz sicher und zuverlässig mit dem Messerhalter verbinden, wobei die Nachteile aus dem Stand der Technik zumindest reduziert oder auch vollständig überwunden sind.

Sofern im nachfolgenden Text das (mechanische) Zusammenwirken des Messersatzes mit dem Messerhalter beschrieben wird, ist von der mechanischen Verbindung des Messersatzes in seiner Betriebsposition mit dem Messerhalter auszugehen. Dabei ragt der Messersatz mit seinen Messern in ein Innenvolumen von dem Behälter, um den Inhalt, der vorzugsweise zumindest ein Nahrungsmittel darstellt, zu bearbeiten. Folglich ist die gesamte Messervorrichtung in der Betriebsposition des Messersatzes betriebsbereit.

In der Entkopplungsposition ist der Messersatz zumindest soweit aus dem Messerhalter entfernt bzw. entkoppelt, dass eine mechanische Entkopplung zum Messerhalter vorhanden ist, so dass der Messersatz nicht mehr durch den Messerhalter angetrieben werden kann. Im Normalfall der Entkopplungsposition ist der Messersatz sogar vollständig aus dem Messerhalter, insbesondere seinem Antriebsteil, entfernt (bzw. getrennt). Folglich ist der Messersatz in der Entkopplungsposition mechanisch vollständig vom Messerhalter getrennt.

Vorteilhaft ist es zudem, wenn in der Betriebsposition das freie Endstück der Drehachse (mit dem vorhandenen Dämpferelement), vorzugsweise ausschließlich, als zumindest radiale und axiale Zentrierhilfe für den Messersatz dient. Hierdurch kann eine radiale Führung der Drehachse des Messersatzes in der Betriebsposition erzielt werden, wodurch ein (axiales) Kippen der Drehachse sicher vermieden werden kann. Gerade bei hohen asymmetrischen Lasten wie z. B. Teig-Kneten kann eine starke (axiale) Bewegung bzw. Kippen der Drehachse des Messersatzes erfolgen und zu einem Schleifkontakt des Messers am Behälterboden führen, was durch die zusätzliche Zentrierhilfe sicher vermieden wird. Auch kann hierbei in der Betriebsposition eine Antriebskraft vom Antrieb zumindest antriebslos oder unabhängig auf das freie Endstück der Drehachse sein. Mit anderen Worten, es werden keine Antriebskräfte oder Drehmomente vom Antrieb (über die Kupplungseinheit) auf das freie Endstück der Drehachse vom Messersatz übertragen. Somit dient dieses freie Endstück der Drehachse vom Messersatz mit dem Dämpferelement ausschließlich als Zentrierhilfe und nicht zur Übertragung der Antriebsenergie.

Auch kann es möglich sein, dass der Messersatz ein Lagerteil mit einer Lagerung für die Drehachse aufweist, womit vorteilhafterweise der Messersatz mechanisch fixierbar aber drehbar in einem Durchbruch, insbesondere im Bodenbereich, von dem Behälter der Küchenmaschine befestigbar ist. Somit kann der gesamte Messersatz mit dem dazugehörenden Lagerteil einfach vom Behälter getrennt und ggf. bei Verschleiß des Messersatzes oder der Lagerung ausgetauscht werden. Wäre jedoch das Lagerteil direkt am Behälter angeordnet, so müsste bei einem Verschleiß der Lagerung der gesamte Behälter ausgetauscht werden.

Zur einfachen Fixierung des Messersatz am Behälter kann ein (äußeres - bezogen auf den Behälter) Fixierteil für den Messersatz vorgesehen sein. Idealerweise wird der Messersatz von oben in den Behälter durch den Durchbruch bis zu einem Anschlag (am Messersatz) eingeführt und von der anderen Seite, gemeint ist von außen im Bodenbereich des Behälters, durch das Fixierteil fixiert. Dabei kann das Fixierteil mit dem Messersatz einen bajonettartigen Verschluss bilden. Durch diese Maßnahme lässt sich der Messersatz zu Reinigungszweck leicht vom Behälter entfernen.

Vorteilhafterweise kann im Rahmen der Erfindung vorgesehen sein, dass der Messersatz zumindest zwei zueinander versetzte Messerklingen aufweist, die vorzugsweise um die Drehachse angeordnet sind. Vorzugsweise sind die Messerklingen dabei um einen Winkel zwischen ca. 75 bis 105 °, bevorzugt von ungefähr oder genau 90 ° zueinander versetzt angeordnet. Zweckmäßigerweise variiert die Länge der vorhandenen Messerklingen zueinander, um sich somit dem Innenvolumen (insbesondere dem korrespondierenden Querschnitt) des Behälters (durch ihre radiale Erstreckung) ideal anpassen zu können.

Auch kann zweckmäßigerweise jede Messerklinge über zumindest zwei oder vier voneinander (sowie ggf. auch zur Drehachse) beabstandete Messerschneiden aufweisen, die vorzugsweise an jedem Ende der jeweiligen Meserklinge angeordnet sein können. Folglich können die Messerklingen mit der Drehachse (als Mittelpunkt) fest verbunden sein, so dass die Drehbewegung der Drehachse zu einer Drehbewegung (und Schneidebewegung) der Messerklingen führt. Auch können die Messerklingen radial von der Drehachse, insbesondere symmetrisch, abstehen, um eine Unwucht an der Drehachse des Messersatzes zu vermeiden. Gerade bei hohen Drehzahlen führen vorhandene Unwuchten (am Messersatz) zu weiteren störenden Schwingungen und Geräuschentwicklungen, die idealerweise vermieden werden.

Ebenfalls ist es vorteilhaft, wenn zumindest eine Messerklinge als Stanzteil hergestellt sein kann, und vorzugsweise in Längsachse bogen- oder wellenförmig ausgestaltet ist. Somit kann die Messerklinge einfach und kostengünstig aber mechanisch stabil hergestellt werden. Auch ein Nachschleifen der Messerschneiden an den Messerklingen ist damit möglich, wodurch die Nutzungsdauer erhöht werden kann. Durch den bogen- oder wellenförmigen Verlauf der Messerklingen um ihre Längsachse, kann ein großer, dreidimensionaler Schnittbereich der Messerklingen im Behälter erreicht werden. Auch im Bodenbereich des Behälters können die Messerklingen somit den Inhalt des Behälters sicher erreichen und schneiden.

Außerdem ist es von Vorteil, wenn zumindest eine Gegenverzahnung des Gegenantriebsteils drehfest mit der Drehachse vom Messersatz befestigt ist und eine Einheit mit dem zweiten Ende der Drehachse bildet. Zu diesem Zweck kann die Gegenverzahnung oder das Gegenantriebsteil (direkt) form- und/oder kraftschlüssig mit der Drehachse verbunden sein. Idealerweise weist die Drehachse hierzu selber eine (Vielfach-)Verzahnung oder einen Polygon-Querschnitt auf, um eine sicher Wellennabenverbindung mit der Gegenverzahnung oder dem Gegenantriebsteil bilden zu können. Auch kann ein Kegelpresssitz für eine sichere Wellennabenverbindung denkbar sein.

Im Rahmen der Erfindung ist es ferner möglich, dass das freie Endstück vom zweiten Ende der Drehachse nicht (axial) über das Gegenantriebsteil am zweiten Ende der Drehachse hinausragt. Mit anderen Worten, das freie Endstück vom zweiten Ende der Drehachse kann durch das Gegenantriebsteil umgeben sein bzw. darin integriert sein. Hierdurch kann das freie Endstück vom zweiten Ende der Drehachse mit dem Dämpferelement, insbesondere in der Entkopplungsposition, durch externe (mechanische) Einwirkungen, wie beispielsweise Stöße etc. geschützt sein. Da außerdem eine (ebene) Abschlussfläche des Gegenantriebsteils deutlich größer als eine (ebene) Abschlussfläche des freien Endstücks der Drehachse ist, kann der Messersatz senkrecht auf eine Arbeitsfläche hingestellt werden, so dass die Messerklingen nicht die Arbeitsfläche berühren und verletzen. Auch kann die (zumindest große oder ebene) Abschlussfläche des Gegenantriebsteils für einen axialen festen Halt am Messerhalter in der Betriebsposition dienen, da einen entsprechende Auflagefläche im Messerhalter als Anschlag (für die Abschlussfläche des Messersatz) vorhanden sein kann.

Ferner kann es auch vorgesehen sein, dass am ersten Ende der Drehachse des Messersatzes ein Adapterteil angeordnet ist, womit insbesondere ein weiteres Funktionswerkzeug am Messersatz, vorzugsweise drehfest mit der Drehachse, befestigbar ist. Dabei kann das Adapterteil am ersten Ende der Drehachse des Messersatzes aufgeschraubt sein, wozu ein entsprechendes Außengewinde an dem ersten Ende der Drehachse vorgesehen ist. Auch ist es möglich, dass durch das Adapterteil die vorhandenen Messerklingen an der Drehachse (unterhalb des Adapterteils) sicher befestigt werden können. Bei dem genannten Funktionswerkzeug kann es sich beispielsweise um ein Knetwerkzeug oder Rührwerkzeug handeln.

Ebenfalls Gegenstand der Erfindung ist eine Messervorrichtung, insbesondere für eine Küchenmaschine, mit einem Messerhalter und einem entkoppelbaren Messersatz, vorzugsweise nach einem der Ansprüche 1 bis 6.

In einer Betriebsposition ist der Messerhalter durch eine Antriebskraft von einem Antrieb antreibbar und die Antriebskraft ist durch eine Kupplungseinheit auf den Messersatz übertragbar. Somit dient die Kupplungseinheit (in der Betriebsstellung) zur Kraft- und Drehmomenten-Übertragung vom Antrieb vom Messerhalter zum entkoppelbaren Messersatz. In einer Entkopplungsposition dient die Kupplungseinheit zum mechanischen Entkoppeln des Messersatz vom Messerhalter. Die Kupplungseinheit ist dabei zumindest zweiteilig mit einem Antriebsteil am Messerhalter und einem Gegenantriebsteil am Messersatz ausgestaltet. Hierbei ist es vorgesehen, dass das Antriebsteil am Messerhalter sowie das Gegenantriebsteil am Messersatz ausgestaltet ist, und dass in der Betriebsposition zwischen dem Antriebsteil und dem Gegenantriebsteil der Kupplungseinheit zumindest ein, insbesondere elastisches, Dämpferelement vorhanden ist. Hierbei kann insbesondere das Dämpferelement derart angeordnet sein, dass es ausschließlich als Zentrierungshilfe für den Messersatz dient. Damit bringt die erfindungsgemäße Messervorrichtung die gleichen Vorteile mit sich, wie sie ausführlich mit Bezug auf den bisher genannten Messersatz beschrieben worden sind.

Auch wird über das zumindest eine Dämpferelement keine Kraft und/oder kein Drehmoment (vom antriebstammend) vom Messerhalter auf den Messersatz übertragen. Mit anderen Worten, das Dämpferelement ist kraft- und/oder drehmomentfrei (bezogen auf die Antriebskraft vom Antrieb) zwischen dem Antriebsteil und dem Gegenantriebsteil der Kupplungseinheit angeordnet.

Zweckmäßigerweise ist dabei das Dämpferelement unverlierbar aber austauschbar am Messerhalter und/oder dem Messersatz angeordnet, um bei einem Verschleiß des Dämpferelements einen einfachen Austausch vornehmen zu können. Hierzu kann das Dämpferelement formschlüssig und/oder kraftschlüssig mit dem Messerhalter und/oder dem Messersatz verbunden sein, was später noch im Detail beschrieben wird. Auch ist es denkbar, dass das Dämpferelement stoffschlüssig mit dem Messerhalter und/oder dem Messersatz verbunden ist, in dem es aufgeklebt und/oder aufgespritzt und/oder aufgeschweißt ist.

Zudem kann die Messervorrichtung mit der Kupplungseinheit an der Messervorrichtung geeignet sein, den Behälter mit dem Messersatz (in seiner Betriebsposition) auch auf eine besonders einfache Art und Weise von einer Basis der Küchenmaschine durch einfaches Hochheben oder Herausziehen zu trennen, wobei insbesondere auch eine selbstständige Trennung zwischen Messerhalter und Messersatz erfolgt. Hierfür sind keine weiteren Handlungen für den Trennvorgang notwendig. Auch die Verbindung (Behälter / Küchenmaschine) erfolgt nur durch ein einfaches Hereinstellen oder Einstecken des Behälters in die Basis der Küchenmaschine, wobei die Kupplungseinheit selbstständig für eine sichere und feste Verbindung, insbesondere zum Messersatz, sorgt. Zusätzlich kann der feststehende Behälter an der Basis der Küchenmaschine durch Haltemittel, insbesondere in Form von Anschlägen und/oder Absätzen, befestigt sein.

Ferner ist es denkbar, dass der Messersatz eine Drehachse aufweist, an der zumindest eine Messerklinge an einem ersten Ende der Drehachse und das Gegenantriebsteil am zweiten Ende der Drehachse vorgesehen ist. Auch kann der Messerhalter ein Aufnahmeelement in dem Antriebsteil aufweisen, welches mit einem freien Endstück vom zweiten Ende der Drehachse in der Betriebsposition zusammenwirken kann. In der Betriebsposition kann dann das Dämpferelement zwischen dem freien Endstück vom zweiten Ende der Drehachse vom Messersatz und dem Aufnahmeelement in dem Antriebsteil vom Messerhalter angeordnet sein.

Um (in der Betriebsposition) eine Schwingungs- und Schallübertragung vom Messerhalter auf den Messersatz oder den Behälter zu reduzieren, ist das genannte Dämpferelement zwischen dem Messersatz und dem Messerhalter, vorzugsweise zwischen dem freien Endstück vom zweiten Ende der Drehachse vom Messersatz und dem Aufnahmeelement in dem Antriebsteil vom Messerhalter angeordnet. Dabei sorgt das Dämpferelement zumindest für einen radialen oder auch axialen Ausgleich der Drehachse des Messersatz, um diesen wieder (in dem Antriebsteil vom Messerhalter) zu zentrieren. Zu diesem Zweck verfügt das Dämpferelement über elastische Eigenschaften, die selbstständig zumindest eine (zumindest radiale) Rückstellkraft erzeugen, falls das Dämpferelement (durch eine Fehlstellung der Drehachse) an einer Stelle komprimiert wird. Durch die vorhandene Rückstellkraft an einer Stelle des komprimierten Dämpferelements wird die verstellte (gekippte) Drehachse des Messersatz selbstständig wieder in eine zentrierte Lage gedrückt.

Auf diese Art und Weise lassen sich Fehlstellungen des Messersatz am Behälter gerade bei hohen asymmetrischen Lasten, wie z. B. Teig-Kneten, zuverlässig und sicher vermeiden.

Gemäß einem weiteren Vorteil kann vorgesehen sein, dass das Antriebsteil vom Messerhalter eine Verzahnung aufweist, die mit einer Gegenverzahnung im Gegenantriebsteil vom Messersatz mechanisch in Eingriff bringbar ist, wodurch in der Betriebsposition (vorzugsweise ausschließlich) die Antriebskraft vom Antrieb übertragbar ist. Hierbei kann die Verzahnung und die Gegenverzahnung als eine Vielfachverzahnung oder Polygonverzahnung ausgebildet sein. Durch diese Verzahnung mit Gegenverzahnung entsteht ein Formschluss in der Kupplungseinheit, um einerseits die Antriebskraft vom Antrieb einfach und zuverlässig übertragen zu können und anderseits den Kupplungsvorgang einfach und zuverlässig auszugestalten, wie bereits beschrieben.

Auch ist es denkbar, dass an der Verzahnung und/oder der Gegenverzahnung eine Hart- und eine Weichkomponente vorgesehen ist, die jeweils als Verzahnung ausgeformt sind. Wobei die Weichkomponente (die insbesondere (radial) über die Hartkomponente der Verzahnung heraussteht) vorgesehen ist, um in Drehrichtung wirkende Stöße oder Kraftveränderungen bzw. Kraftsprünge zu dämpfen. Allerdings kann die Weichkomponente an der Verzahnung und/oder der Gegenverzahnung eine Kippbewegung (Fehlstellung) der Drehachse des Messersatz bzw. der Drehachse zum Messerhalter verursachen, die dann durch das elastische Dämpferelement kompensiert werden kann.

Ein weiterer Vorteil im Rahmen der Erfindung ist erzielbar, wenn das Aufnahmeelement in dem Antriebsteil vom Messerhalter topfförmig ausgestaltet ist, um in der Betriebsposition das freie Endstück vom zweiten Ende der Drehachse vom Messerhalter zumindest teilweise aufnehmen zu können. In der Betriebsposition kann folglich das freie Endstück vom zweiten Ende der Drehachse vom Messerhalter zumindest teilweise in das topfförmig ausgestaltete Aufnahmeelement in dem Antriebsteil vom Messerhalter ragen. Zweckmäßigerweise ist dabei das Dämpferelement zwischen dem freien Endstück vom zweiten Ende der Drehachse und dem topfförmig ausgestaltete Aufnahmeelement in dem Antriebsteil angeordnet, um somit selbstständig eine Korrektur der Fehlstellung zu bewirken. Dabei wirkt das topfförmig ausgestaltete Aufnahmeelement als Anschlag für das fehlgestellte, freien Endstück vom zweiten Ende der Drehachse, wodurch die Zentrierhilfe erfolgt.

Es sei an dieser Stelle grundsätzlich klargestellt, dass das, insbesondere elastische, Dämpferelement auch nur oder zusätzlich am Antriebsteil vom Messerhalter, vorzugsweise am bzw. im topfförmig ausgestaltete Aufnahmeelement in dem Antriebsteil, angeordnet sein kann.

Vorteilhafterweise kann im Rahmen der Erfindung vorgesehen sein, dass in der Betriebsposition das Dämpferelement zumindest teilweise oder vollständig im topfförmig ausgestaltet Aufnahmeelement angeordnet ist, und wobei vorzugsweise ein vorhandener Spalt zwischen dem freien Endstück vom zweiten Ende der Drehachse vom Messersatz und dem Aufnahmeelement in dem Antriebsteil vom Messerhalter durch das Dämpferelement zumindest teilweise oder vollständig reduziert wird. Mit anderen Worten, kann das Dämpferelement den vorhandenen Spalt zumindest teilweise oder vollständig ausfüllen. Da sich das Dämpferelement in der Betriebsposition mit der gesamten Messervorrichtung dreht, findet auch keine Übertragung der Antriebsenergie (vom Antrieb) durch das Dämpferelement statt.

Des Weiteren kann es vorgesehen sein, dass in der Betriebsposition das Dämpferelement im, insbesondere umfangsartigen, Spalt zwischen dem freien Endstück vom zweiten Ende der Drehachse vom Messersatz und dem Aufnahmeelement in dem Antriebsteil vom Messerhalter angeordnet ist, und wobei vorzugsweise das Dämpferelement das zweite Ende der Drehachse zumindest teilweise oder vollständig umfangsmäßig umgibt. Somit kann eine größtmögliche Rückstellkraft vom Dämpferelement zur Kompensation einer Fehlstellung der Drehachse des Messersatz und/oder zur Zentrierung des Messersatz (durch die Materialanhäufung vom Dämpferelement im Spalt) erzeugt werden. Das Dämpferelement kann dabei das freie Endstück schlauchartig oder hülsen- bzw. dosenartig umgeben oder wie ein oder mehrere Ringe, die axialversetzt sind, umfangsmäßig umfassen. Auch ist es denkbar, dass das Dämpferelement schraubenartig oder in axialen Streifen am freien Endstück und/oder dem topfförmigen Bereich angeordnet ist. Dabei kann das Dämpferelement form- und/oder kraft- und/oder stoffschlüssig zumindest mit dem Messersatz, insbesondere dem freien Endstück, oder dem Messerhalter, insbesondere dem topfförmigen Bereich, verbunden sein.

Die Form des erwähnten Spalts ergibt sich aus dem axialen Querschnitt vom freien Endstück sowie dem damit korrespondierenden Querschnitt des topfförmigen Bereichs. Grundsätzlich sind die jeweiligen Querschnitte nicht auf einen runden oder ovalen Querschnitt beschränkt. Auch ist es denkbar, dass der Spalt kegelstumpfartig bzw. sich zum Ende hin verjüngend ausgeformt ist, damit der Kupplungsvorgang beim Einstecken des Messersatzes (bzw. des Behälters) in den Messerhalter (bzw. in die Küchenmaschine) weiter optimiert ist. Für die Bildung des Kegelstumpfs kann sich das freie Endstück der Drehachse zum offenen Ende hin im Querschnitt verjüngen, wobei vorzugsweise der topfförmige Bereich vom Aufnahmeelement geometrisch komplementär zur Aufnahme des freien Endstücks ausgestaltet ist.

Auch oder zusätzlich ist es denkbar, dass in der Betriebsposition das Dämpferelement im, insbesondere plattenförmigen, Spalt zwischen dem freien Endstück vom zweiten Ende der Drehachse vom Messersatz und dem Aufnahmeelement in dem Antriebsteil vom Messerhalter angeordnet ist, und wobei vorzugsweise das Dämpferelement bodenseitig am, insbesondere plattenförmigen, Spalt und/oder an einer Stirnseite des zweiten Endes der Drehachse flächig angeordnet ist. Damit können auch axiale Stöße auf die Drehachse vom Dämpferelement kompensiert werden.

Außerdem ist es von Vorteil, wenn das elastische Dämpferelement ein Vollmaterial aufweist, welches vorzugsweise materialeinheitlich ausgestaltet ist. Hierdurch kann die Rückstellkraft bei einer Verformung des Dämpferelements optimiert werden. Vorzugsweise können Elastomere, wie z. B. Styrol-Butadien-Kautschuk (SBR), Nitrilkautschuk (NBR), Chloroprenkautschuk (CR), Flour-Polymer-Kautschuk (FKM), Butadien-Kautschuk (BR), Ethylen-Propylen-Dien Kautschuk (EPDM) sowie Mischung draus, als Vollmaterial zum Einsatz kommen.

Auch ist es denkbar, dass das elastische Dämpferelement ein Mehrkomponenten-Material aufweist, welches vorzugsweise zumindest zwei unterschiedliche Materialien aufweist. Hierdurch lassen sich die Vorteile der jeweiligen Materialen mit einander kombinieren. Dabei kann das Mehrkomponenten-Material z. B. als 2 Komponenten-Spritzguss-Material zum Einsatz kommen. Auch kann beispielsweise ein inneres erstes Material härter oder weicher als ein äußeres zweites Material ausgestaltet sein, um somit die gewünschte Flexibilität und Verformbarkeit des Dämpferelements gezielt einzustellen. Ebenfalls kann auch ein drittes Material, z. B. zur Beschichtung des Dämpferelements, vorgesehen sein.

Ferner kann es möglich sein, dass das elastische Dämpferelement (sowohl als Vollmaterial als auch als Mehrkomponenten-Material) ein zumindest teilweise aufgeschäumtes Material aufweist bzw. zumindest teilweise oder vollständig aufgeschäumt ist. Durch die Maßnahme lässt sich die elastische Eigenschaft des Dämpferelements verbessern, insbesondere wenn diese besonders weich sein soll. Zweckmäßigerweise kann dann das aufgeschäumte Material mit einem abriebfesten Kunststoff-Material, wie z. B. Polytetrafluorethylen (PTFE), umhüllt oder beschichtet sein.

Ein weiterer Vorteil kann im Rahmen der Erfindung erzielt werden, wenn zumindest eine, insbesondere umfangsartige, Nut im (freien Endstück vom) zweiten Ende der Drehachse und/oder im topfförmigen Bereich des Aufnahmeelements zur Anordnung des Dämpferelements vorgesehen ist. Die vorgesehene Nut kann zur formschlüssigen Aufnahme des Dämpferelements dienen, so dass eine einfache aber sichere Montage des Dämpferelements an bzw. in der Nut möglich ist. Auch ist es denkbar, dass die Nut nur abschnittsweise vorgesehen ist, um das Dämpferelement formschlüssig zu fixieren. Ebenfalls können auch zwei oder mehrere axialversetzte Nuten zur Fixierung der Dämpferelemente vorgesehen sein.

Ebenfalls ist es denkbar, dass anstelle der Nut streifen- oder punktförmige Erhebungen (in einem axialen Bereich) am freien Endstück vom zweiten Ende der Drehachse und/oder im topfförmigen Bereich des Aufnahmeelements zur (formschlüssigen) Anordnung des Dämpferelements vorgesehen sind. Auch hierdurch kann das zumindest eine Dämpferelement formschlüssig und sicher befestigt werden.

Das erfindungsgemäße Dämpferelement kann in einer vorteilhaften Ausgestaltung ringförmig oder hülsenförmig ausgestaltet sein und durch einen Formschluss und/oder Kraftschluss und/oder Stoffschluss am freien Endstück vom zweiten Ende der Drehachse und/oder im topfförmigen Bereich des Aufnahmeelements gesichert sein. Auch kann eine Kombination von entsprechenden Dämpferelementen zum Einsatz kommen. Ebenfalls ist es denkbar, dass das Dämpferelement dosenförmig oder topfförmig jeweils mit einem Boden ausgestaltet ist, um den Bereich des plattenförmigen Spalts mit dem Boden vom Dämpferelement (wenigstens teilweise) auszufüllen. Schließlich kann das Material des Dämpferelements im Bereich des umfangsförmigen Spalts andersartig zum Material des Dämpferelements im Bereich des plattenförmigen Spalts ausgestaltet sein. Damit kann eine optimale Anpassung an die gewünschte Wirkung des Dämpferelements erzielt werden.

Auch ist es denkbar, dass im Bereich des Dämpferelements eine Oberfläche des freien Endstücks vom zweiten Ende der Drehachse und/oder eine Oberfläche des topfförmigen Bereichs des Aufnahmeelements angeraut ist, um insbesondere eine kraftschlüssige und/oder stoffschlüssige Verbindung an dieser Stelle zu optimieren.

Ebenfalls Gegenstand der Erfindung ist eine Küchenmaschine. Hierbei ist es vorgesehen, dass das, insbesondere multifunktionale, Küchengerät zumindest folgende Teile umfasst: einen Behälter, insbesondere in Form einer Schüssel, und ein Basisteil zur Halterung und Betätigung des Behälters und einen Antrieb im Basisteil, wodurch eine Messervorrichtung antreibbar ist. Hierbei kann die Messervorrichtung, nach zumindest einem der Ansprüche 8 bis 14, ausgestaltet sein.

Damit bringt die erfindungsgemäße Küchenmaschine die gleichen Vorteile mit sich, wie sie ausführlich mit Bezug auf das erfindungsgemäße Messersatz und die erfindungsgemäße Messervorrichtung erwähnt worden sind.

Zudem kann die Küchenmaschine geeignet sein, um halb- oder auch vollautomatisch Speisen zu zubereiten. Zu diesem Zweck kann die Küchenmaschine weiterhin zumindest eine Waage, eine Heizung oder eine Steuerung aufweisen. Zur einfacheren Bedienung kann die Küchenmaschine über ein, insbesondere multifunktionales, Display zur Eingabe und/oder Ausgabe von Informationen zur Steuerung (der Küchenmaschine) durch einen Benutzer aufweisen.

Ferner kann es im Rahmen der Erfindung vorgesehen sein, dass der Messersatz mit seinen Messerklingen zumindest teilweise in ein Innenvolumen des Behälters hineinragt und/oder dass der Messersatz mechanisch fixierbar aber drehbar in einem Durchbruch, insbesondere im Bodenbereich, vom Behälter der Küchenmaschine befestigbar ist. Hierbei kann (in der Betriebsposition) ein Dichtungselement zur Abdichtung des Durchbruchs, vorzugsweise am Messersatz, angeordnet sein. Auch ist es denkbar, dass die Heizung der Küchenmaschine plattenförmig ausgestaltet im Bodenbereich des Behälters angeordnet ist. In dieser Heizung kann auch der Durchbruch für die Messervorrichtung vorgesehen sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1:: eine schematische Frontansicht auf eine erfindungsgemäße Küchenmaschine mit einem montierten Behälter und einer Messervorrichtung,
- Figur 2:: eine Schnittansicht durch einen erfindungsgemäßen Messerhalter von einer Messervorrichtung in Entkopplungsposition,
- Figur 3:: eine dreidimensionale Frontansicht eines erfindungsgemäßen Messersatz in Entkopplungsposition,
- Figur 4:: eine Schnittansicht A-A durch den Messersatz aus Figur 3 mit einem Dämpferelement, und
- Figur 5 bis 8:: diverse rein schematische Schnittansichten durch eine erfindungsgemäße Messervorrichtung jeweils in Betriebspositionen, wobei unterschiedliche Dämpferelemente zum Einsatz kommen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

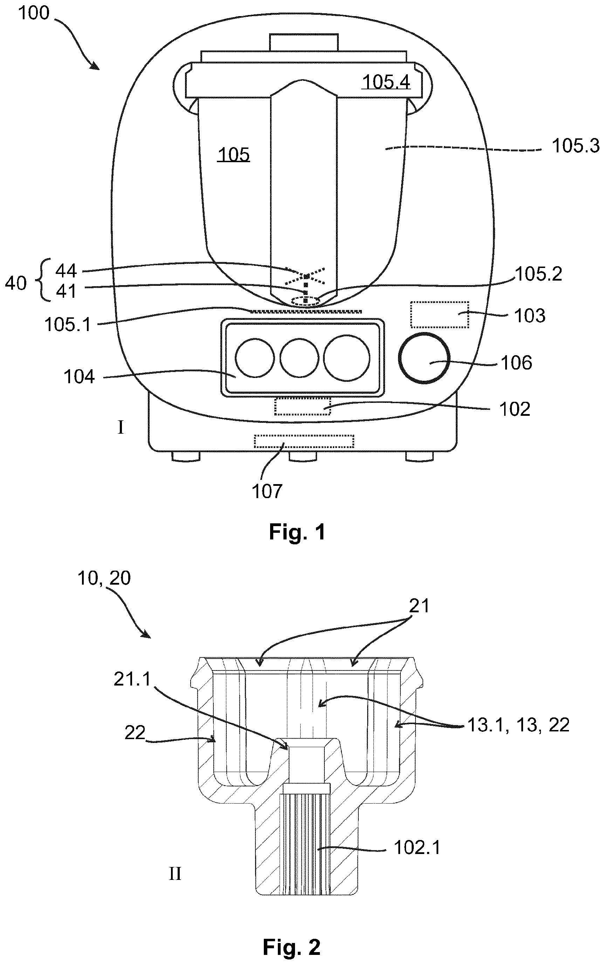

In der Figur 1 ist die erfindungsgemäße Küchenmaschine 100 in Frontansicht dargestellt, wobei die Küchenmaschine 100 ein Basisteil 101 aufweist, an bzw. in dem ein Antrieb 102 mit einer Antriebsachse 102.1 angeordnet ist. Die Antriebsachse 102.1 wird dabei in einen Messerhalter 20 (drehfest) geführt, um diesen drehbar anzutreiben. Der Messerhalter 20 selbst ist in der Figur 2 näher dargestellt.

Um den Betrieb der Küchenmaschine 100 (durch einen Benutzer) steuern zu können, ist ein Display 104 vorgesehen, wodurch (Steuerung-)Informationen ein- und ausgebbar für den Benutzer sind. Folglich kann es sich um ein berührungsempfindliches Display 104 handeln, welches auch farbige Informationen anzeigen kann. Des Weiteren ist zur Steuerung 103 auch ein (Multi-)Funktionsknopf 106 vorgesehen, wodurch sich auch die angezeigten Informationen auf dem Display 104 steuern und verändern lassen. Ferner ist in dem Basisteil 101 der Küchenmaschine 100 auch die Steuerung 103 vorgesehen, die die wesentlichen Funktionen und Aufgaben der Küchenmaschine 100 steuert. Des Weiteren kann auch eine Waage 107 in der Küchenmaschine 100 vorhanden sein, die insbesondere das Gewicht von einem Innenvolumen 105.3 von einem Behälter 105 erfassen kann, der zur selber Aufnahme von Nahrungsmitteln dient. Der Behälter 105 ist selbst topf- oder schüsselartig ausgestaltet und kann mit einem Deckel 105.4 verschlossen werden. In der dargestellten Anordnung der Küchenmaschine 100 ist der Behälter 105 in einer Betriebsposition I auf dem Basisteil 101 angeordnet. In dieser Betriebsposition I ist eine erfindungsgemäße Messervorrichtung 10 über eine vorhandene Kupplungseinheit 13 (automatisch / selbstständig) mit dem Antrieb 102 mechanisch verbunden, sodass die Antriebskraft P vom Antrieb 102 auf die Messervorrichtung 10, insbesondere einen drehbaren Messersatz 40 über einen Messerhalter 20 im Basisteil 101 der Küchenmaschine 100 übertragbar ist. In dem Behälter 105 kann noch eine plattenförmige Heizung 105.1 im Bodenbereich vorgesehen sein, um den Inhalt erwärmen zu können. Ferner ist im Boden des Behälters 105 auch ein Durchbruch 105.2 vorgesehen, durch den die Messervorrichtung 10 bzw. der drehbare Messersatz 40 durchragen kann, um die mechanische Verbindung zum Antrieb 102 herstellen zu können.

In der Figur 2 ist ein Teil der Messervorrichtung 10, nämlich der Messerhalter 20 dargestellt, der am bzw. im Basisteil 101 der Küchenmaschine 100 (unlösbar) angeordnet ist. In der Figur 2 ist der Messerhalter 20 in einer Entkopplungsposition II dargestellt, wobei der weitere Teil der Messervorrichtung 10 nämlich der Messersatz 40 mechanisch getrennt (durch die Kupplungseinheit 13) und unabhängig vom Messerhalter 20 angeordnet ist. Wie in Figur 2 weiter zu erkennen ist, ragt von unten die Antriebsachse 102.1 vom Antrieb 102 in den Messerhalter 20, wobei eine Drehbewegung über den vorhandenen Vielzahn (formschlüssig am Achsenende) von der Antriebsachse 102.1 auf den Messerhalter 20 übertragen wird.

Die Messervorrichtung 10 weist den Messerhalter 20 und den davon entkoppelbaren Messersatz 40 auf, wobei in einer Betriebsposition I der Messerhalter 20 durch eine Antriebskraft P von Antrieb 102 antreibbar ist und die Antriebskraft durch die erwähnte Kupplungseinheit 13 auf den Messersatz 40 übertragbar ist. In der Entkopplungsposition II dient die Kupplungseinheit 13 zum mechanischen Entkoppeln des Messersatz 40 vom Messerhalter 20. Dabei ist die Kupplungseinheit 13 zumindest zweiteilig mit einem Antriebsteil 13.1 am Messerhalter 20 und einem Gegenantriebsteil 13.2 am Messersatz 40 ausgestaltet.

In der Figur 2 ist das Antriebsteil 13.1 der Kupplungseinheit 13 dargestellt. Der Messerhalter 20 weist ferner ein Aufnahmeelement 21 in dem Antriebsteil 13.1 auf, in dem das Gegenantriebsteil 13.2 vom Messersatz 40 aufgenommen werden kann, in der Betriebsposition I. Ferner ist in dem Aufnahmeelement 21 von dem Antriebsteil 13.1 des Messerhalters 20 ein topfförmiger Bereich 21.1 vorgesehen, welches mit einem freien Endstück 41.3 von einem zweiten Ende 41.2 einer Drehachse 41 des Messerhalters 20 mechanisch (als Zentrierhilfe) in einer Betriebsposition I zusammenwirkt. Wie anhand der Figur 2 auch zu erkennen ist, weist das Antriebsteil 13.1 vom Messerhalter 20 eine (grobe) Verzahnung 22 auf, die mit einer Gegenverzahnung 42 im Gegenantriebsteil 13.2 vom Messersatz 40 mechanisch in Eingriff bringbar ist, um in der Betriebsposition I die Antriebskraft vom Antrieb 102 verlustfrei übertragen zu können. Die Verzahnung 22 sowie die Gegenverzahnung 42 ist als Vielfachverzahnung, ähnlich zu einem im Querschnitt sternförmigen Werkzeugschlüssel (ähnlich zu einem Torx^{®}-Schlüssel), ausgestaltet.

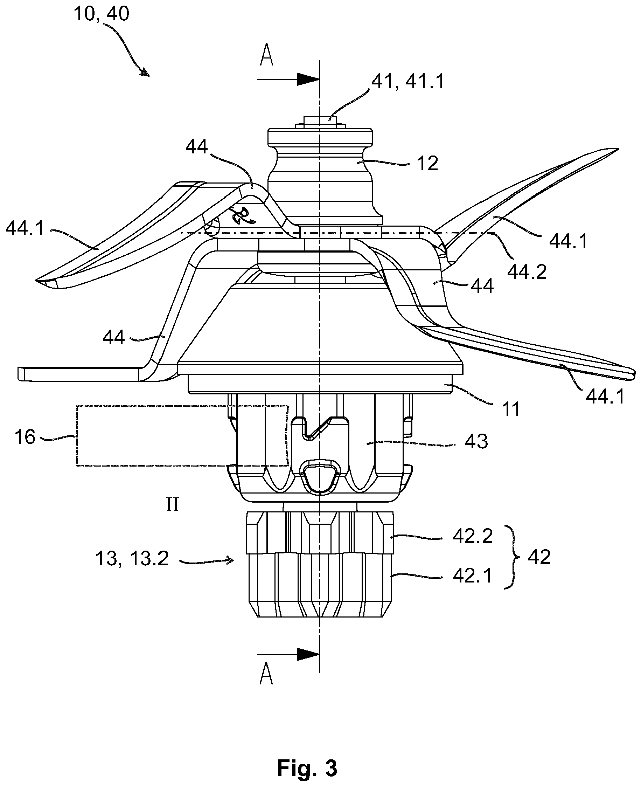

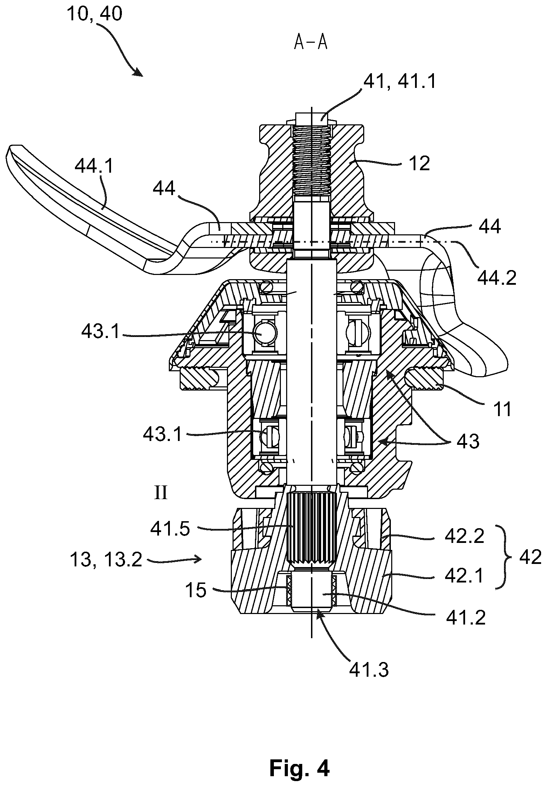

In der Figur 3 ist der erfindungsgemäße Messersatz 40 in einer dreidimensionalen Fronansicht dargestellt, wie er auch üblicherweise im Behälter 105 fachgerecht in seiner Betriebsposition I angeordnet ist. Dabei weist der Messersatz 40 eine Drehachse 41 mit einem ersten Ende 41.1 der Drehachse 41 und einem zweiten Ende 41.2 der Drehachse 41 auf. Das erste Ende 41.1 der Drehachse 41 bildet (im vorliegenden Fall) die obere Spitze des Messersatz 40. Das zweite Ende 41.2 der Drehachse 41 bildet hingegen ein unteres Ende der Drehachse 41. Ferner ist am zweiten Ende 41.2 der Drehachse 41 ein freies Endstück 41.3 (räumlich) innerhalb der Gegenverzahnung 42 angeordnet (bzw. darin integriert bzw. davon umgeben, s. Figur 4). Ferner ist im Bereich des ersten Endes 41.1 der Drehachse 41 auch ein Adapterteil 12 vorgesehen, welches zweckmäßigerweise mit der Drehachse 41 verschraubt ist. Durch diese Verschraubung des Adapterteils 12 können auch die beiden darunterliegenden Messerklingen 44 an der Drehachse 41 sicher befestigt werden. Wie aus der Figur 3 gut zu erkennen ist, sind die Messerklingen 44 zu ihren Längsachsen 44.2 bogen- und/oder wellenförmig ausgestaltet. Zweckmäßigerweise sind die Messerklingen 44 als Stanzteile hergestellt und weisen jeweils an ihren (gegenüberliegenden) Enden Messerschneiden 44.1 auf, womit der Inhalt in dem Behälter 105 geschnitten und zerkleinert werden kann. Die gegenüberliegenden Kanten von den Messerschneide 44.1 an Messerklingen 44 können stumpf ausgestaltet sein, und stellen damit keine zusätzlichen Messerschneiden dar. Auch ist es denkbar, dass diese Kanten ebenfalls mit Messerschneiden 44.1 ausgestaltet sind.

Ferne weist der Messersatz 40 ein Lagerteil 43 mit wenigstens einer Lagerung 43.1, mit insbesondere zwei Kugellagern, auf. Mit dem Lagerteil 43 ragt der Messersatz 40 in der Betriebsposition I durch den Durchbruch 105.2 vom Behälter 105 und kann durch das Lagerteil 43 durch ein schematisch dargestelltes Fixierteil 16, welches über einen bajonettartigen Verschluss verfügen kann, am Behälter 105 drehfest gehalten. Zur Abdichtung des Durchbruchs 105.2 im montierten Zustand des Messersatz 40 am Behälter 105 ist ein Dichtungselement 11, welches im Wesentlichen scheibenförmig ausgestaltet ist, am Messersatz 40 vorgesehen. Da durch das Fixierteil 16 ein leichter Druck auf das Dichtungselement 11 entsteht, ist somit der Behälter 105 bei dem montierten Messersatz 40 im Durchbruchsbereich sicher abgedichtet.

Die Drehbewegung vom Antrieb 102 wird auf den Messersatz 40 durch das Gegenantriebsteil 13.2 vom Messersatz 40, welches eine Gegenverzahnung 42 aufweist, übertragen. Zu diesen Zweck ist die Gegenverzahnung 42 drehfest mit der Drehachse 41, insbesondere über eine (Vielfach-)Verzahnung 22 und formschlüssig, gesichert. Die Drehbewegung der Drehachse 41 wird über die gelagerte Drehachse 41 auf die beiden Messerklingen 44 (innerhalb des Behälters 105) im oberen Bereich des Messersatz 40 übertragen.

Wie weiter aus der Figur 3 gut zu erkennen ist, weist die Gegenverzahnung 42 eine Hartkomponente 42.1 und eine Weichkomponente 42.2 auf, die als Verzahnung ausgeformt sind. Durch die Hartkomponente 42.1, die (axial) unterhalb der Weichkomponente 42.2 an der Gegenverzahnung 42 vorgesehen ist, werden die mechanischen Antriebskräfte auf die Drehachse 41 sicher übertragen. Die (axial) darüberliegende Weichkomponente 42.2 dient dabei dazu, dass in der Drehrichtung wirkende Stöße oder Kraftveränderungen bzw. Kraftsprünge bei der Drehbewegung gedämpft werden. Zu diesem Zweck ragen die Verzahnungen der Weichkomponente 42.2 etwas radial über die Hartkomponenten 42.1 heraus, was in Figur 3 gut sichtbar ist.

In der Figur 4 ist der Messersatz 40 in einer Schnittansicht A-A dargestellt. Dabei ist im Schnitt gut das Innere vom Lagerteil 43 mit den beiden Kugellagern 43.1 zu erkennen. Auch die Verschraubung am ersten Ende 41.1 der Drehachse 41 für das Antriebsteil 13.1 ist gut sichtbar. Ebenfalls die Vielfachverzahnung 41.5 zum Formschluss der Drehachse 41.1 mit der Gegenverzahnung 42.2 ist gut dargestellt.

Wie sich aus Figur 4 auch ergibt, ragt am zweiten Ende 41.2 der Drehachse 41 das freie Endstück 41.3 aus dem Inneren der Gegenverzahnung 42 heraus, um in der Betriebsposition I, wie zuvor beschrieben, als Zentrierhilfe zusammen wirken zu können. Auch ist beispielhaft das elastische Dämpferelement 15 als hülsenförmiges Dämpferelement 15 dargestellt.

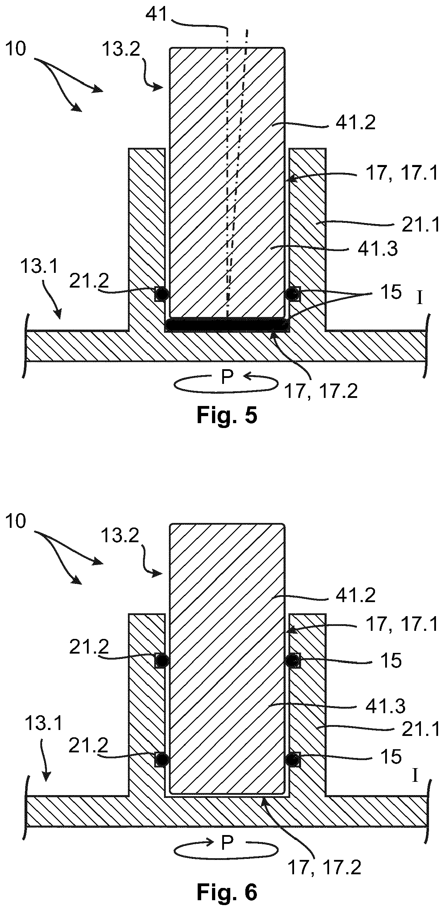

In den weiteren Figuren 5 bis 8 sind verschiedene Ausführungsbeispiele für das Zusammenwirken des Antriebsteils 13.1 mit dem Gegenantriebsteils 13.2 der Kupplungseinheit 13, insbesondere des topfförmigen Bereiches 21.1 vom Aufnahmeelement 21 mit dem freien Endstück 41.3 vom zweiten Ende 41.2 der Drehachse 41 (als Zentrierhilfe) gezeigt. Dabei kann zumindest ein Dämpferelement 15 oder mehrere Dämpferelemente 15 zwischen dem freien Endstück 41.3 der Drehachse 41 und dem topfförmigen Bereiche 21.1 vom Aufnahmeelement 21 in der Betriebsposition I vorgesehen sein.

Wie in den Figuren 5 bis 8 gut zu erkennen ist, bildet sich in der Betriebsposition I I ein Spalt 17 zwischen dem freien Endstück 41.3 und dem topfförmigen Bereich 21.1. Dieser Spalt 17 kann in einen umfangsförmigen Spalt 17.1 und einen plattenförmigen Spalt 17.2 unterteilt werden, wobei der Spalt 17 selber im Längsschnitt im Wesentlichen "U"-förmig ausgestaltet ist. Erfindungsgemäß ist es vorgesehen, dass dieser Spalt 17 mit dem Dämpferelement 15 zumindest teilweise ausgefüllt wird, wobei die elastischen Eigenschaften des Dämpferlemement1 5 dazu dienen, eine Fehlstellung des Messersatzes 40 zum Messerhalter 20 zu kompensieren.

In der Figur 5 ist im plattenförmigen Spalt 17.2 ein ebenfalls plattenförmig ausgestaltetes Dämpferelement 15 vorgesehen, welches im Bodenbereich am topfförmigen Bereich 21.2 gehalten ist. Durch dieses plattenförmige Element 15 können Stöße in axialer Richtung auf die Drehachse 41 kompensiert werden. Zusätzlich kann zumindest ein weiteres Dämpferelement 15 in einer Nut 21.2 im topfförmigen Bereich 21.2 angeordnet sein, um beispielsweise ein Winkelversatz durch eine Fehlstellung der Drehachse 21 kompensieren zu können, siehe hierzu die eingezeichneten Achsen 41. Das Dämpferelement 15 in der Nut 21.2 kann dabei als ein O-Ring ausgestaltet sein und ist in der Nut 21.2 formschlüssig sowie ggf. kraftschlüssig gehalten. Der Pfeil P deutet in der Figur 5 eine mögliche Antriebsrichtung für den Messersatz 40 an.

In der Figur 6 kommen ebenfalls 2 Dämpferelemente 15, die jeweils als O-Ringe ausgestaltet sind, zum Einsatz. Beide ringförmige Dämpferelemente 15 sind jeweils in zwei (axial) übereinanderliegenden Nuten 21.2 im topfförmigen Bereich 21.1 angeordnet, um somit den Messersatz 40 führen und ggf. zentrieren zu können. Der Spalt 17 ist in der Figur 6, insbesondere im unteren Bereich, beispielhaft dargestellt, sodass auch der plattenförmige Spalt 17.2 erkennbar ist. Aus der Figur 6 geht gut hervor, dass dieser Spalt 17 im Längsschnitt "U"-förmig ausgestaltet ist.

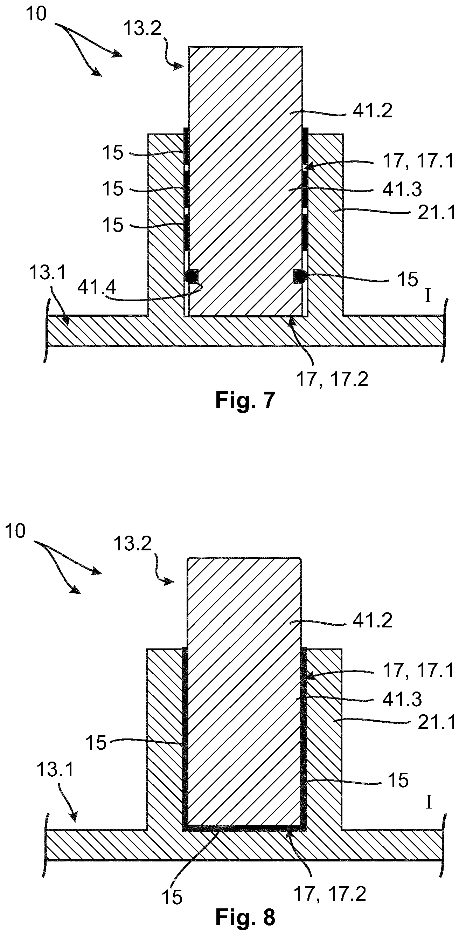

In der Figur 7 kommt eine Kombination von unterschiedlichen Dämpferelementen 15 zum Einsatz. Dabei können die vorgesehenen Dämpferelement 15 jeweils am freien Endstück 41.3 vom zweiten Ende 41.2 der Drehachse 41 angeordnet sein. Wie in Figur 7 gut zu erkennen ist, kommen im oberen Bereich drei axial versetzte hülsenförmige Dämpferelemente 15 beabstandet zueinander zum Einsatz, die z. B. auf die Drehachse 41 aufgeklebt, aufgeschweißt und/oder aufgeschrumpft sein können. Auch kann die Oberfläche der Drehachse 41 in diesem Bereich aufgeraut oder leicht vertieft sein, um die hülsenförmige Dämpferelemente 15 aufnehmen zu können. Im unteren Bereich der Drehachse 41 ist zusätzlich eine Nut 41.4 in der Drehachse 41 vorgesehen, um das Dämpferelement 15, welches ein O-Ring aufweist, aufnehmen zu können. Wie in Figur 7 gut zu erkennen ist, ragt das obere hülsenförmige Dämpferelement 15 über den topfförmigen Bereich 21.2 vom Aufnahmeelement 21 heraus.

In der Figur 8 ist der Spalt 17 fast oder vollständig vollflächig mit dem Dämpferelement 15 ausgestattet. Dabei kann das Dämpferelement 15 am topfförmigen Bereich 21.1 angeordnet sein, wobei es durch Verschweißung oder Verklebung damit verbunden sein kann. Damit wird der Spalt 17 quasi lückenlos in der Betriebsposition I ausgefüllt, wenn das freie Endstück 41.3 der Drehachse 41 eingeführt ist.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung bzw. Ansprüche zu verlassen.

### Bezugszeichenliste

- 10: Messervorrichtung
- 11: Dichtungselement
- 12: Adapterteil
- 13: Kupplungseinheit
- 13.1: Antriebsteil
- 13.2: Gegenantriebsteil
- 15: Dämpferelement
- 16: Fixierteil
- 17: Spalt
- 17.1: umfangsförmiger Spalt
- 17.2: plattenförmiger Spalt

- 20: Messerhalter
- 21: Aufnahmeelement (für 41.)
- 21.1: topfförmiger Bereich
- 21.2: Nut
- 22: Verzahnung

- 40: Messersatz
- 41: Drehachse
- 41.1: erste Ende der Drehachse
- 41.2: zweite Ende der Drehachse
- 41.3: freies Endstück
- 41.4: Nut
- 41.5: (Vielfach-)Verzahnung
- 42: Gegenverzahnung
- 42.1: Hartkomponente
- 42.2: Weichkomponente
- 43: Lagerteil
- 43.1: Lagerung
- 44: Messerklinge
- 44.1: Messerschneide
- 44.2: Längsachse

- 100: Küchenmaschine
- 101: Basisteil
- 102: Antrieb
- 102.1: Antriebsachse
- 103: Steuerung
- 104: Display
- 105: Behälter
- 105.1: Heizung
- 105.2: Durchbruch
- 105.3: Innenvolumen
- 105.4: Deckel
- 106: Funktionsknopf
- 107: Waage

- I: Betriebsposition
- II: Entkopplungsposition
- P: Pfeil für Antriebskraft / Antriebsrichtung

## Patentansprüche

1. Messersatz (40), insbesondere für eine Küchenmaschine (100), der ein eigenständiges Teil einer Messervorrichtung (10) bildet,
wobei der Messersatz (40) durch eine Kupplungseinheit (13) entkoppelbar von einem Messerhalter (20) ausgestaltet ist, und
in einer Betriebsposition (I) der Messerhalter (20) durch eine Antriebskraft (P) von einem Antrieb (102) antreibbar ist und die Antriebskraft (P) durch die Kupplungseinheit (13) auf den Messersatz (40) übertragbar ist, und
wobei in einer Entkopplungsposition (II) die Kupplungseinheit (13) zum mechanischen Entkoppeln des Messersatz (40) vom Messerhalter (20) dient, und
die Kupplungseinheit (13) zumindest zweiteilig ausgestaltet ist, nämlich
mit einem Antriebsteil (13.1) am Messerhalter (20) und
einem Gegenantriebsteil (13.2) am Messersatz (40),
wobei der Messersatz (40) eine Drehachse (41) aufweist, an der zumindest eine Messerklinge (44) an einem ersten Ende (41.1) der Drehachse (41) und das Gegenantriebsteil (13.2) am zweiten Ende (41.2) der Drehachse (41) vorgesehen ist, **dadurch gekennzeichnet, dass**
am zweiten Ende (41.2) der Drehachse (41) ein freies Endstück (41.3) der Drehachse (41) vorhanden ist,
welches zumindest ein, insbesondere elastisches, Dämpferelement (15) aufweist.

2. Messersatz (40) nach Anspruch 1,
**dadurch gekennzeichnet,**
**dass** in der Betriebsposition (I) das freie Endstück (41.3) der Drehachse (41), vorzugsweise ausschließlich, als Zentrierhilfe für den Messersatz (40) dient, und
wobei insbesondere in der Betriebsposition (I) eine Antriebskraft vom Antrieb (102) zumindest antriebslos oder unabhängig auf das freie Endstück (41.3) der Drehachse (41) ist.

3. Messersatz (40) nach Anspruch 1 oder 2,
**dadurch gekennzeichnet,**
**dass** der Messersatz (40) ein Lagerteil (43) mit zumindest einer Lagerung (43.1) für die Drehachse (41) aufweist,
womit vorteilhafterweise der Messersatz (40) mechanisch fixierbar aber drehbar in einem Durchbruch (105.2), insbesondere im Bodenbereich, von einem Behälter (105) der Küchenmaschine (100) befestigbar ist.

4. Messersatz (40) nach einem der vorherigen Ansprüche,
**dadurch gekennzeichnet,**
**dass** der Messersatz (40) zwei zueinander versetzte Messerklingen (44) aufweist, die vorzugsweise um die Drehachse (41) angeordnet sind, und
wobei insbesondere jede Messerklinge (44) über zumindest zwei voneinander beabstandete Messerschneiden (44.1) aufweist, und/oder
**dass** zumindest eine Messerklinge (44) als Stanzteil hergestellt ist, und vorzugsweise in Längsachse (44.2) bogen- oder wellenförmig ausgestaltet ist.

5. Messersatz (40) nach zumindest einem der vorherigen Ansprüche
**dadurch gekennzeichnet,**
**dass** zumindest eine Gegenverzahnung (42) des Gegenantriebsteils (13.2) drehfest mit der Drehachse (41) vom Messersatz (40) befestigt ist und eine Einheit mit dem zweiten Ende (41.2) der Drehachse (41) bildet, und/oder
wobei das freie Endstück (41.3) vom zweiten Ende (41.2) der Drehachse (41) nicht über das Gegenantriebsteil (13.2) am zweiten Ende (41.2) der Drehachse (41) hinausragt.

6. Messersatz (40) nach einem der vorherigen Ansprüche
**dadurch gekennzeichnet,**
**dass** am ersten Ende (41.1) der Drehachse (41) des Messersatzes (40) ein Adapterteil (12) angeordnet ist, womit insbesondere ein weiteres Funktionswerkzeug am Messersatz (40), vorzugsweise drehfest mit der Drehachse (41), befestigbar ist.

7. Messervorrichtung (10), insbesondere für eine Küchenmaschine (100), mit
einem Messerhalter (20) und einem entkoppelbaren Messersatz (40), vorzugsweise nach einem der Ansprüche 1 bis 6,
wobei in einer Betriebsposition (I) der Messerhalter (20) durch eine Antriebskraft von einem Antrieb (102) antreibbar ist und die Antriebskraft durch eine Kupplungseinheit (13) auf den Messersatz (40) übertragbar ist, und
wobei in einer Entkopplungsposition (II) die Kupplungseinheit (13) zum mechanischen Entkoppeln des Messersatz (40) vom Messerhalter (20) dient, und
die Kupplungseinheit (13) zumindest zweiteilig mit einem Antriebsteil (13.1) am Messerhalter (20) und einem Gegenantriebsteil (13.2) am Messersatz (40) ausgestaltet ist,
**dadurch gekennzeichnet, dass**
das Antriebsteil (13.1) am Messerhalter (20) sowie das Gegenantriebsteil (13.2) am Messersatz (40) ausgestaltet ist, und
wobei in der Betriebsposition (I) zwischen dem Antriebsteil (13.1) und dem Gegenantriebsteil (13.2) der Kupplungseinheit (13) zumindest ein, insbesondere elastisches, Dämpferelement (15) vorhanden ist,
wobei insbesondere das Dämpferelement (15) derart angeordnet ist, dass es ausschließlich als Zentrierungshilfe für den Messersatz (40) dient.

8. Messervorrichtung (10) nach Anspruch 7,
**dadurch gekennzeichnet,**
**dass** der Messersatz (40) eine Drehachse (41) aufweist, an der zumindest eine Messerklinge (44) an einem ersten Ende (41.1) der Drehachse (41) und das Gegenantriebsteil (13.2) am zweiten Ende (41.2) der Drehachse (41) vorgesehen ist und/oder
**dass** der Messerhalter (20) ein Aufnahmeelement (21) in dem Antriebsteil (13.1) aufweist, welches mit einem freien Endstück (41.3) vom zweiten Ende (41.2) der Drehachse (41) in der Betriebsposition (I) zusammenwirkt, und
wobei in der Betriebsposition (I) das Dämpferelement (15) zwischen dem freien Endstück (41.3) vom zweiten Ende (41.2) der Drehachse (41) vom Messersatz (40) und dem Aufnahmeelement (21) in dem Antriebsteil (13.1) vom Messerhalter (20) angeordnet ist.

9. Messervorrichtung (10) nach Anspruch 7oder 8,
**dadurch gekennzeichnet,**
**dass** das Antriebsteil (13.1) vom Messerhalter (20) eine Verzahnung (22) aufweist, die mit einer Gegenverzahnung (42) im Gegenantriebsteil (13.2) vom Messersatz (40) mechanisch in Eingriff bringbar ist, wodurch in der Betriebsposition (I) die Antriebskraft vom Antrieb (102) übertragbar ist,
wobei insbesondere die Verzahnung (22) und die Gegenverzahnung (42) als eine Vielfachverzahnung ausgebildet ist.

10. Messervorrichtung (10) nach einem der Ansprüche 7 bis 9,
**dadurch gekennzeichnet,**
**dass** das Aufnahmeelement (21) in dem Antriebsteil (13.1) vom Messerhalter (20) topfförmig ausgestaltet ist, um in der Betriebsposition (I) das freie Endstück (41.3) vom zweiten Ende (41.2) der Drehachse (41) vom Messerhalter (20) zumindest teilweise aufnehmen zu können, und/oder
**dass** in der Betriebsposition (I) das freie Endstück (41.3) vom zweiten Ende (41.2) der Drehachse (41) vom Messerhalter (20) zumindest teilweise in das topfförmig ausgestaltete Aufnahmeelement (21) in dem Antriebsteil (13.1) vom Messerhalter (20) ragt.

11. Messervorrichtung (10) nach einem der Ansprüche 7 bis 10,
**dadurch gekennzeichnet,**
**dass** in der Betriebsposition (I) das Dämpferelement (15) zumindest teilweise oder vollständig im topfförmig ausgestaltet Aufnahmeelement (21) angeordnet ist, und
wobei vorzugsweise ein vorhandener Spalt (17) zwischen dem freien Endstück (41.3) vom zweiten Ende (41.2) der Drehachse (41) vom Messersatz (40) und dem Aufnahmeelement (21) in dem Antriebsteil (13.1) vom Messerhalter (20) durch das Dämpferelement (15) zumindest teilweise oder vollständig reduziert wird.

12. Messervorrichtung (10) nach einem der Ansprüche 7 bis 11,
**dadurch gekennzeichnet,**
**dass** in der Betriebsposition (I) das Dämpferelement (15) im, insbesondere umfangsartigen, Spalt (17) zwischen dem freien Endstück (41.3) vom zweiten Ende (41.2) der Drehachse (41) vom Messersatz (40) und dem Aufnahmeelement (21) in dem Antriebsteil (13.1) vom Messerhalter (20) angeordnet ist, und
wobei vorzugsweise das Dämpferelement (15) das zweite Ende (41.2) der Drehachse (41) zumindest teilweise oder vollständig umfangsmäßig umgibt, und/oder
**dass** in der Betriebsposition (I) das Dämpferelement (15) im, insbesondere plattenförmigen, Spalt (17) zwischen dem freien Endstück (41.3) vom zweiten Ende (41.2) der Drehachse (41) vom Messersatz (40) und dem Aufnahmeelement (21) in dem Antriebsteil (13.1) vom Messerhalter (20) angeordnet ist, und
wobei vorzugsweise das Dämpferelement (15) bodenseitig am insbesondere plattenförmigen Spalt (17.2) und/oder an einer Stirnseite des zweiten Endes (41.2) der Drehachse (41) flächig angeordnet ist.

13. Messervorrichtung (10) nach einem der Ansprüche 7 bis 12,
**dadurch gekennzeichnet,**
**dass** das elastische Dämpferelement (15) ein Vollmaterial aufweist, welches materialeinheitlich ausgestaltet ist, und/oder
**dass** das elastische Dämpferelement (15) ein Mehrkomponenten-Material aufweist, welches zumindest zwei unterschiedliche Materialien aufweist, und/oder
**dass** das elastische Dämpferelement (15) ein zumindest teilweise aufgeschäumtes Material aufweist.

14. Messervorrichtung (10) nach einem der Ansprüche 7 bis 13,
**dadurch gekennzeichnet,**
**dass** zumindest eine, insbesondere umfangsartige, Nut (21.2, 41.4) im zweiten Ende (41.2) der Drehachse (41) und/oder im topfförmigen Bereich (21.1) des Aufnahmeelement (21) zur Anordnung des Dämpferelements (15) vorgesehen ist.

15. Küchenmaschine (100), insbesondere multifunktionales Küchengerät (100), umfassend:
einen Behälter (105), insbesondere in Form einer Schüssel, und
ein Basisteil (101) zur Halterung und Betätigung des Behälters (105) und
einem Antrieb (102) im Basisteil (101), wodurch eine Messervorrichtung (10), nach zumindest einem der Ansprüche 8 bis 14, antreibbar ist.

16. Küchenmaschine (100) nach Anspruch 15
**dadurch gekennzeichnet,**
**dass** der Messersatz (40) mit seinen Messerklingen (44) zumindest teilweise in ein Innenvolumen (105.3) des Behälters (105) hineinragt und/oder
**dass** der Messersatz (40) mechanisch fixierbar aber drehbar in einem Durchbruch (105.2), insbesondere im Bodenbereich, vom Behälter (105) der Küchenmaschine (100) befestigbar ist,
wobei insbesondere ein Dichtungselement (11) zur Abdichtung des Durchbruchs (105.2), vorzugsweise am Messersatz (40), angeordnet ist.
